(19) Europäisches Patentamt
European Patent Office
Office européen des brevets

(11) Veröffentlichungsnummer : **0 181 289**
**B1**

(12) # EUROPÄISCHE PATENTSCHRIFT

(45) Veröffentlichungstag der Patentschrift : **07.09.88**

(51) Int. Cl.⁴ : **G 03 C 7/26**, C 07 F 9/48

(21) Anmeldenummer : **85810503.4**

(22) Anmeldetag : **01.11.85**

(54) **Verfahren zum Stabilisieren von Magentakuppler enthaltendem photographischem Material.**

(30) Priorität : **07.11.84 CH 5359/84**

(43) Veröffentlichungstag der Anmeldung : **14.05.86 Patentblatt 86/20**

(45) Bekanntmachung des Hinweises auf die Patenterteilung : **07.09.88 Patentblatt 88/36**

(84) Benannte Vertragsstaaten : **BE DE FR GB IT NL**

(56) Entgegenhaltungen :
**EP-A- 0 000 352**
**EP-A- 0 056 787**
**US-A- 4 185 006**

(73) Patentinhaber : **CIBA-GEIGY AG**
**Klybeckstrasse 141**
**CH-4002 Basel (CH)**

(72) Erfinder : **Tschopp, Paul**
**Peterstrasse 1**
**CH-3186 Düdingen (CH)**
Erfinder : **Leppard, David G.**
**Dr. Route de Bourguillon 6**
**CH-1723 Marly (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die vorliegende Erfindung betrifft ein Verfahren zum Stabilisieren von Magentakuppler enthaltendem photographischem Material durch Einarbeitung eines Dibenzoxaphosphorins in die Kuppler enthaltenden Emulsions- oder in eine an sie angrenzenden Kolloidschicht.

Ein grosses Problem bei der Dunkellagerung photographischer Materialien, die mindestens einen Magentakuppler enthalten, besteht darin, dass infolge der Zersetzung dieses Kupplers eine Vergilbung erfolgt (siehe dazu R.J. Tuite : « Image Stability in Color Photography », J. Appl. Photogr. Eng. 5, 200, 1979). Ferner führt diese Zersetzung zu einer verminderten Farbstoffbildung bei der Kupplungsreaktion und als Folge davon zu einer veränderten Wiedergabe verschiedener Farbtöne.

Es wurde deshalb bereits versucht, dieses Problem zu lösen. So wird beispielsweise in der japanischen Offenlegungsschrift 52/082 219 ein chromogenes farbphotographisches Material beschrieben, bei dem die erwähnte Vergilbung durch die Anwesenheit gewisser Polyvinylimidazole verringert wird. In der japanischen Offenlegungsschrift 53/108 428 wird ein farbphotographisches Material offenbart, das zu diesem Zweck substituierte Phosphorsäure(4-hydroxy) anilide, in der japanischen Offenlegungsschrift 57/204 036 ein solches, das Brenzkatechin-dialkylether enthält und in der japanischen Auslegeschrift 48-32 728 ein solches das Alkyl- und/oder Arylphosphite enthält.

Trotzdem ist es bis heute nicht gelungen, das Problem in befriedigender Weise zu lösen, da diese Verbindungen nur eine geringe Wirkung haben. Es wurde nun überraschenderweise gefunden, dass bestimmte Dibenzoxaphosphorine die bei der Dunkellagerung durch den Magentakuppler bewirkte Vergilbung weitgehend verhindern.

Dibenzoxaphosphorine sind zum Teil bekannte Verbindungen. Sie sind beispielsweise in der EP-A-0 000 352 als Stabilisatoren für Kunststoffe und Elastomere sowie in der EP-A-0 056 787 als Entwicklungsbeschleuniger für photographische Silberhalogenidemulsionen beschrieben.

Gegenstand der vorliegenden Erfindung ist demnach ein Verfahren zum Stabilisieren von Magentakuppler enthaltendem photographischem Material, dadurch gekennzeichnet, dass in die den Magentakuppler enthaltende Emulsions- oder in eine an sie angrenzende Kolloidschicht mindestens eine Verbindung der Formel I

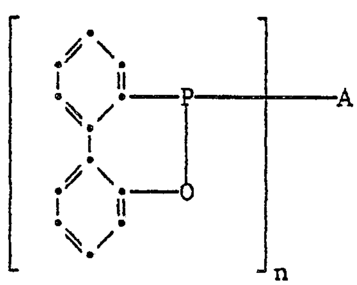

(I)

eingearbeitet wird,
worin

n die Zahl 1 oder 2 bedeutet und

A, wenn n = 1 ist, eine Gruppe der Formel II

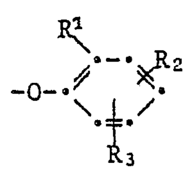

(II)

ist, worin $R_1$ $C_1$-$C_{18}$Alkyl, $C_5$-$C_6$Cycloalkyl, Cl, Br, CN, $C_7$-$C_{21}$-Aralkyl oder eine Gruppe der Formel III

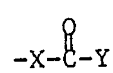

(III)

ist, worin X $C_2$-$C_8$Alkylen bedeutet und Y eine Gruppe —$OR_4$, —$N(R_5)(R_6)$, $C_1$-$C_4$Alkyl, der Rest

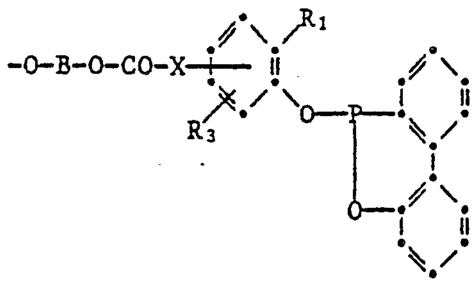

oder

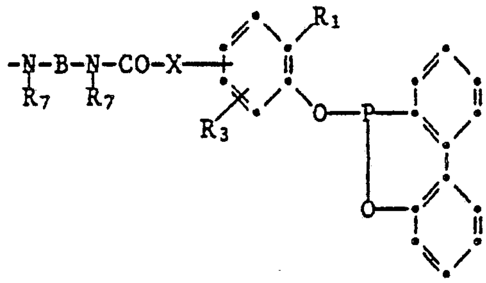

ist, wobei B ein ununterbrochenes oder ein- oder mehrmals durch —O— oder —S— unterbrochenes $C_1$-$C_{18}$Alkylen oder eine Gruppe der Formel

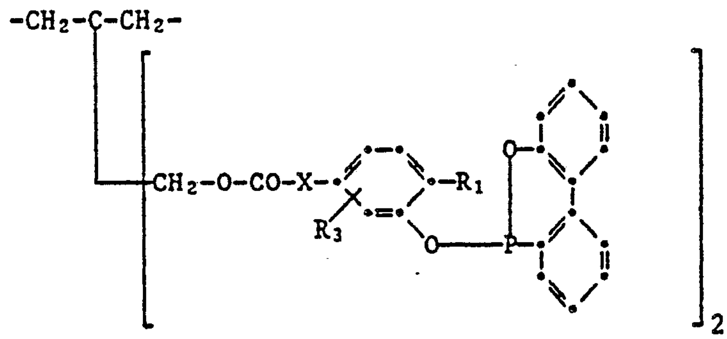

bedeutet,

$R_2$ für Wasserstoff, eine Gruppe —$OR_7$ oder für die gleiche Bedeutung wie $R_1$ steht, $R_3$ Wasserstoff ist oder die gleiche Bedeutung wie $R_1$ hat, $R_4$ ein ununterbrochenes oder ein- oder mehrmals durch —O— unterbrochenes $C_1$-$C_{18}$Alkyl, ein Polyäthylenglykolrest, Phenyl, substituiertes Phenyl oder Benzyl ist, $R_5$ und $R_6$ unabhängig voneinander Wasserstoff, $C_1$-$C_{18}$Alkyl, Phenyl, Benzyl oder eine Gruppe —$(CH_2)_m$—O—$R_8$ bedeuten, $R_7$ Wasserstoff oder $C_1$-$C_4$Alkyl ist, $R_8$-$C_{18}$Alkyl bedeutet und m eine Zahl zwischen 1 und 4 ist, oder $R_2$ und $R_3$ zusammen $C_3$-$C_8$Alkylen oder eine Gruppe

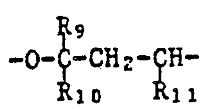

bilden, worin $R_9$, $R_{10}$ und $R_{11}$ unabhängig voneinander $C_1$-$C_4$Alkyl bedeuten, oder

A, wenn n = 2 ist, eine Gruppe der Formel IV

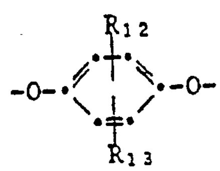

(IV)

bedeutet, worin $R_{12}$ und $R_{13}$ unabhängig voneinander $C_1$-$C_{18}$Alkyl oder eine Gruppe der Formel III sind oder A eine Gruppe der Formel V

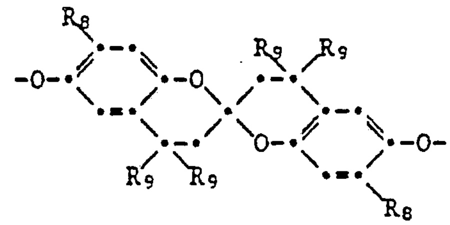

(V)

ist, worin $R_8$ und $R_9$ die oben angegebene Bedeutung haben.

Etwaige Substituenten bedeuten als $C_1$-$C_{18}$Alkyl geradkettiges oder vezweigtes Alkyl, z. B. Methyl, Aethyl, Propyl, i-Propyl, Butyl, i-Butyl, tert.-Butyl, Amyl, 1,1-Dimethylpropyl, 1,1,3,3-Tetramethylbutyl, 1-Methylpentyl, Hexyl, Heptyl, n-Octyl, 2-Aethylhexyl, n-Nonyl, Isononyl, Decyl, tert.-Decyl, Undecyl, Dodecyl, Tetradecyl, Hexadecyl, Octadecyl, $R_1$, $R_2$, $R_{12}$ und $R_{13}$ sind als Alkyl bevorzugt verzweigtes Alkyl mit 4 bis 8 Kohlenstoffatomen und insbesondere tert.-Butyl oder 1,1,3,3-Tetramethylbutyl. $R_4$ ist bevorzugt geradkettiges Alkyl mit 4 bis 12 Kohlenstoffatomen und insbesondere n-Hexyl.

$R_7$, $R_9$, $R_{10}$ und $R_{11}$ sind als $C_1$-$C_4$Alkyl beispielsweise Methyl, Aethyl, Propyl, i-Propyl, Butyl, i-Butyl, tert.-Butyl. Bevorzugt sind sie Methyl.

Bedeuten etwaige Substituenten $C_5$-$C_6$Cycloalkyl, so handelt es sich um Cyclopentyl und insbesondere um Cyclohexyl.

Als $C_7$-$C_{21}$Aralkyl bedeuten etwaige Substituenten z. B. unsubstituiertes oder ein- oder zweimal mit Methyl, Aethyl, Propyl, i-Propyl, n-Butyl, i-Butyl oder tert.-Butyl im Phenylkern substituiertes Benzyl, sowie insbesondere α,α-Dimethylbenzyl.

Wenn $R_2$ und $R_3$ zusammen $C_3$-$C_8$Alkylen bilden, so handelt es sich z. B. um Trimethylen, Tetramethylen und insbesondere um die Gruppe $-C(CH_3)_2-CH_2-C(CH_3)_2-$.

Wenn $R_2$ und $R_3$ zusammen eine Gruppe

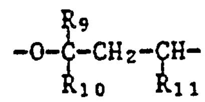

bilden, so handelt es sich insbesondere um die Gruppe

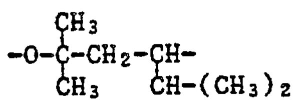

X bedeutet als $C_2$-$C_8$Alkylen, z. B. Aethylen, 1,2-Propylen, Trimethylen, Hexamethylen und insbesondere die Gruppe $-C(CH_3)_2-(CH_2)_3-$, wobei das dimethylsubstituierte Kohlenstoffatom am Phenylkern gebunden ist.

B bedeutet beispielsweise Methylen, Aethylen, 1,2-Propylen, Trimethylen, Hexamethylen, Dodecamethylen, Octadecamethylen, 1,2-Hexylen, $(-CH_2CH_2-O-)_2CH_2CH_2-$ oder $-CH_2CH_2-S-CH_2CH_2-$ und insbesondere Aethylen, Trimethylen, Tetramethylen, Pentamethylen oder Hexamethylen.

$R_4$ als substituiertes Phenyl bedeutet beipielsweise einen Phenylrest substituiert mit einer $C_1$-$C_{12}$Alkoxy- und/oder mit einer oder mehreren $C_1$-$C_{12}$Alkylgruppen, mit Halogen, wie z. B. Chlor, Brom, Phenyl, Aralkyl, wie z. B. Benzyl, oder an zwei benachbarten C-Atomen mit $(CH_2)_3$ ; so zum Beispiel kann $R_4$ als substitutiertes Phenyl 4-Methoxyphenyl, 4-Aethoxyphenyl, 3,5-Dimethylphenyl, 4-Benzylphenyl, 4-n-Dodecylphenyl oder 4-Chlorphenyl sein.

In dem erfindungsgemässen Verfahren werden vorzugsweise Dibenzoxaphosphine der Formel I eingesetzt, in denen

A, wenn n = 1 ist, eine Gruppe der Formel II

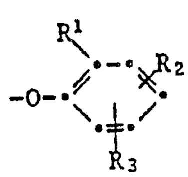

(II)

ist, worin $R_1$ $C_1$-$C_{18}$Alkyl, $C_5$-$C_6$Cycloalkyl, Cl, Br, CN,$C_7$-$C_{21}$Aralkyl oder eine Gruppe der Formel III

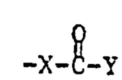

(III)

ist, worin X $C_2$-$C_8$Alkylen bedeutet und Y eine Gruppe $—OR_4$, $—N(R_5)(R_6)$, $R_2$ Wasserstoff, $R_1$ oder eine Gruppe $—OR_7$ ist, $R_3$ Wasserstoff oder $R_1$ bedeutet, $R_4$ ein ununterbrochenes oder ein- oder mehrmals durch —O— unterbrochenes $C_1$-$C_{18}$Alkyl, ein Polyäthylenglykolrest, Phenyl, substitutiertes Phenyl oder Benzyl ist, $R_5$ und $R_6$ unabhängig voneinander Wasserstoff, $C_1$-$C_{18}$Alkyl, Phenyl, Benzyl oder eine Gruppe $—(CH_2)_m—O—R_8$ bedeuten, $R_7$ Wasserstoff oder $C_1$-$C_4$Alkyl ist, $R_8$ $C_1$-$C_{18}$Alkyl bedeutet und m eine Zahl zwischen 1 und 4 ist, oder $R_2$ und $R_3$ zusammen $C_3$-$C_8$Alkylen oder eine Gruppe

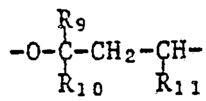

bilden, worin $R_9$, $R_{10}$ und $R_{11}$ unabhängig voneinander $C_1$-$C_4$Alkyl bedeuten, oder

A, wenn n = 2 ist, eine Gruppe der Formel IV

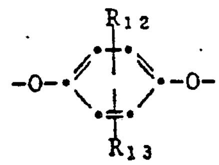

(IV)

bedeutet, worin $R_{12}$ und $R_{13}$ unabhängig voneinander $C_1$-$C_{18}$Alkyl oder eine Gruppe der Formel III sind oder A eine Gruppe der Formel V

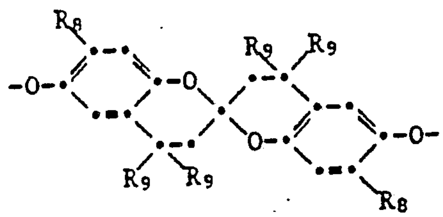

(V)

ist, worin $R_8$ und $R_9$ die oben angegebene Bedeutung haben.

Für das erfindungsgemässe Verfahren besonders interessant einzusetzende Dibenzoxaphosphorine sind jene der Formel I, worin

A, wenn n = 1 ist, eine Gruppe der Formel II bedeutet, worin $R_1$ und $R_2$ unabhängig voneinander Wasserstoff, $C_1$-$C_{18}$Alkyl, $C_7$-$C_{21}$Aralkyl bedeuten und $R_3$ Wasserstoff ist oder $R_2$ und $R_3$ zusammen $C_2$-$C_8$Alkylen bilden, oder

A, wenn n = 2 ist, eine Gruppe der Formel IV ist, worin $R_{12}$ und $R_{13}$ $C_1$-$C_{18}$Alkyl oder eine Gruppe $—X—C(O)OR_4$ sind, worin X und $R_4$ die oben angegebene Bedeutung haben.

Für das erfindungsgemässe Verfahren bevorzugt einzusetzende Dibenzoxaphosphorine sind jene der Formel I, worin

A, wenn n = 1 ist, eine Gruppe der Formel VI

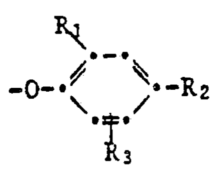

(VI)

bedeutet, worin $R_1$ und $R_2$ verzweigtes $C_4$-$C_8$Alkyl oder α,α-Dimethylbenzyl bedeuten und $R_3$ Wasserstoff ist oder $R_2$ und $R_3$ zusammen die Gruppe $—C(CH_3)_2—CH_2—C(CH_3)_2—$ bilden, oder

A, wenn n = 2 ist, eine Gruppe der Formel VII

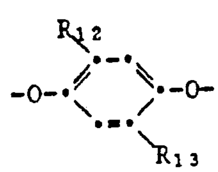

(VII)

bedeutet, worin $R_{12}$ und $R_{13}$ verzweigtes Alkyl oder eine Gruppe der Formel VIII

$$-C(CH_3)_2-(CH_2)_3-COOR_4 \qquad (VIII)$$

bedeuten, worin $R_4$ $C_1$-$C_{18}$Alkyl ist.

Für das erfindungsgemässe Verfahren besonders bevorzugt einzusetzende Dibenzoxaphosphorine sind solche der Formel I, worin

A, wenn n = 1 ist, eine Gruppe der Formel VI bedeutet, worin $R_1$ und $R_2$ tert.-Butyl, 1,1,3,3-Tetramethylbutyl oder α,α-Dimethylbenzyl bedeutet und $R_3$ Wasserstoff ist oder $R_2$ und $R_3$ zusammen eine Gruppe $-C(CH_3)_2-CH_2-C(CH_3)_2-$ bilden, oder

A, wenn n = 2 ist, eine Gruppe der Formel VII bedeutet, worin $R_{12}$ und $R_{13}$ tert.-Butyl, 1,1,3,3-Tetramethylbutyl oder eine Gruppe der Formel VIII ist, worin $R_4$ $C_1$-$C_{10}$Alkyl bedeutet.

Die Verbindungen der Formel I werden in einer Menge von 1-400 Mol%, bevorzugt 20-100 Mol%, bezogen auf den Magentakuppler, eingesetzt.

Als nicht limitierende Beispiele von Verbindungen der Formel I seien die Verbindungen der folgenden Formeln genannt :

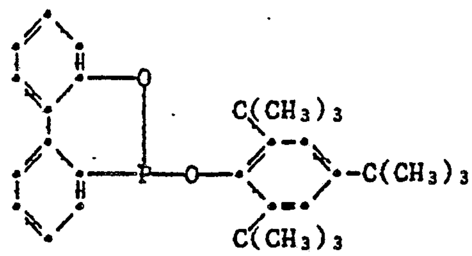

Stabilisator 1

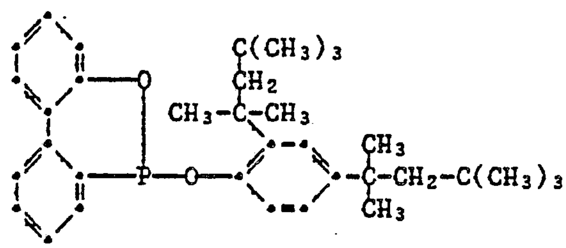

Stabilisator 2

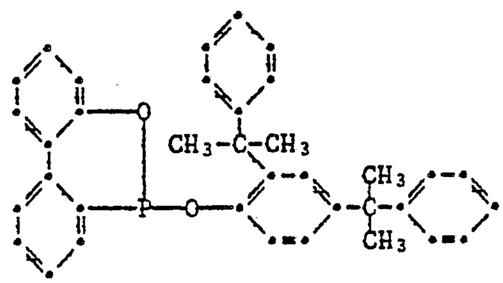

Stabilisator 3

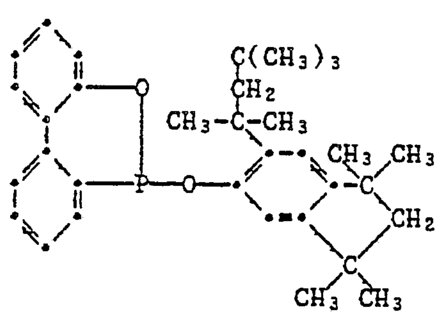

Stabilisator 4

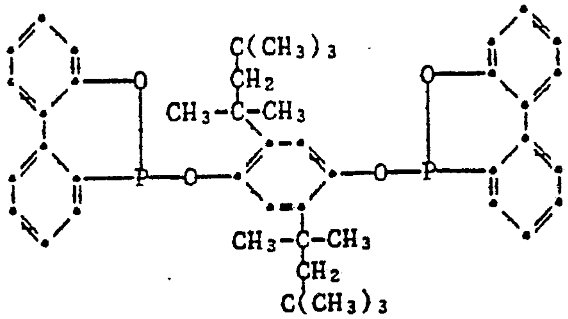

Stabilisator 5

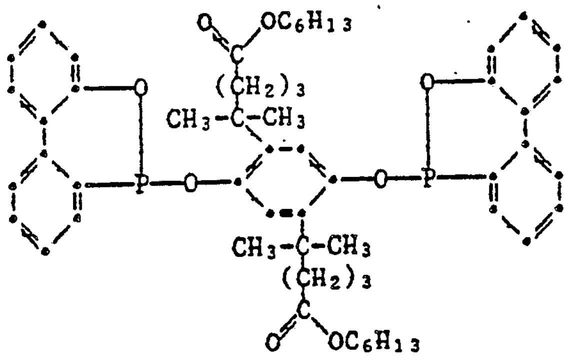

Stabilisator 6

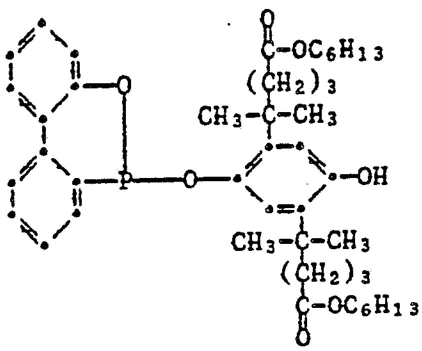

Stabilisator 7

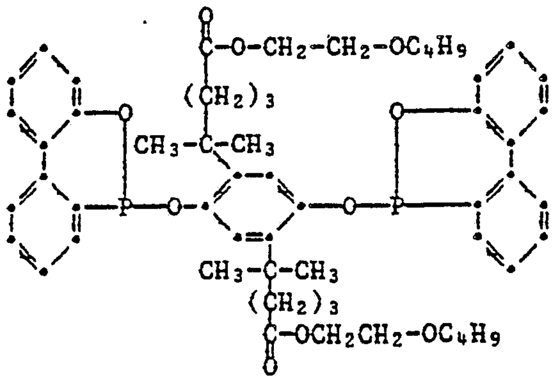

Stabilisator 8

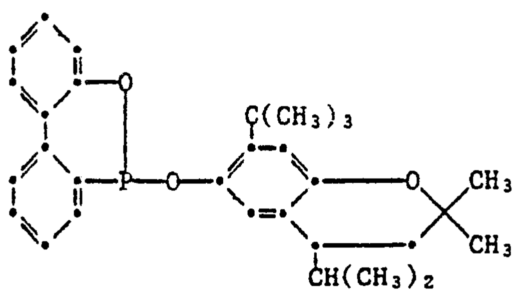

Stabilisator 9

Weitere Beispiele

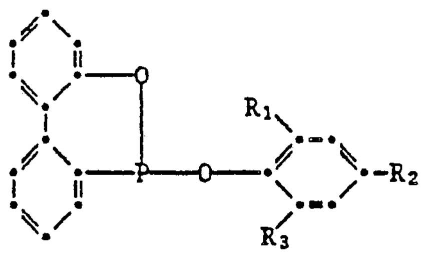

| Stabilisator | $R_1$ | $R_2$ | $R_3$ |
|---|---|---|---|
| 10 | $-CH(CH_3)_2$ | $-C(CH_3)_3$ | $-CH(CH_3)_2$ |
| 11 | $-C(CH_3)_3$ | $-CH(CH_3)_2$ | $-C(CH_3)_3$ |

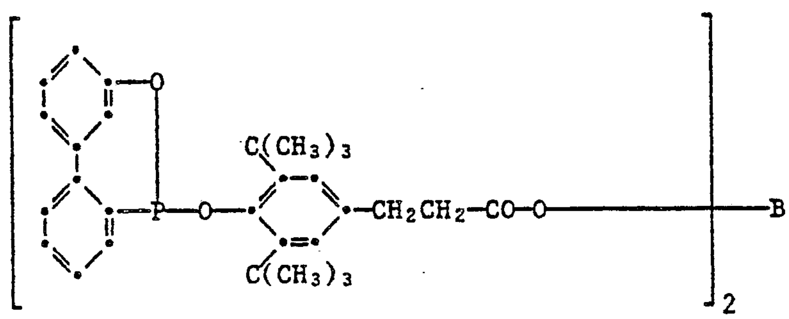

| Stabilisator | B |
|---|---|
| 12 | $-(CH_2)_6-$ |
| 13 | $-(CH_2CH_2-O)_2CH_2CH_2-$ |
| 14 | $-CH_2CH_2-S-CH_2CH_2-$ |

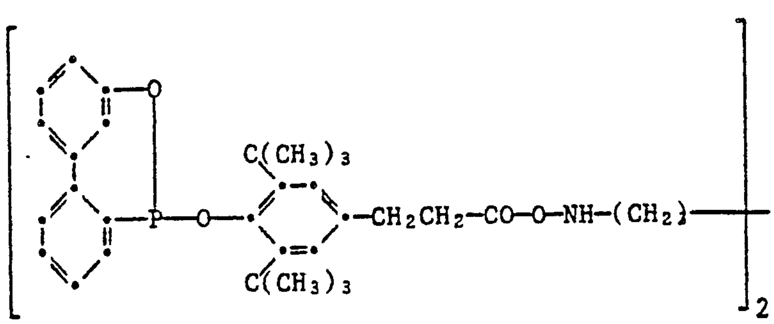

Stabilisator 15

(Fortsetzung)

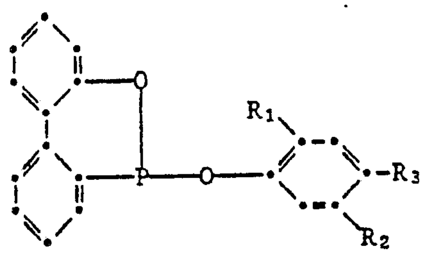

| Stabilisator | $R_1$ | $R_2$ | $R_3$ |
|---|---|---|---|
| 16 | $-C(CH_3)_2-(CH_2)_3COOCH_3$ | OH | wie $R_1$ |
| 17 | $-C(CH_3)_3$ | $-C(CH_3)_2-CH_2-C(CH_3)_2-$ | |

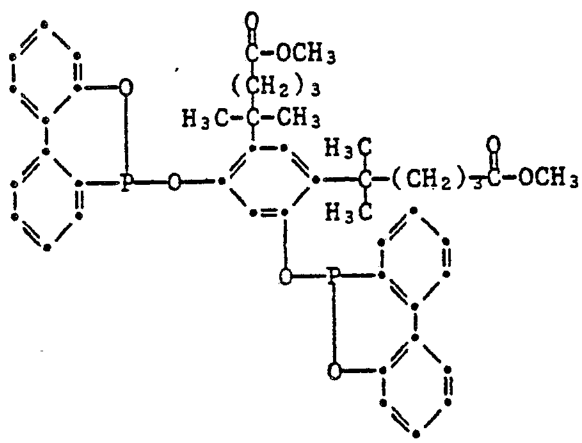

Stabilisator 18

Ganz besonders bevorzugt werden in dem erfindungsgemässen Vefahren als Verbindungen der Formel I die Stabilisatoren 2, 6 und 7 eingesetzt.

Ausser den Stabilisatoren 6 bis 9 und 12 bis 15, die neu sind, sind alle erfindungsgemäss einzusetzenden Verbindungen bekannt.

Verbindungen der Formel I, worin

A, wenn n = 1 ist, eine Gruppe der Formel II ist, worin $R_1$, $R_2$ und $R_3$ unabhängig voneinander $C_1$-$C_8$Alkyl, α,α-Dimethylbenzyl oder eine Gruppe der Formel III bedeuten, $R_2$ zusätzlich Methoxy oder Aethoxy und $R_3$ zusätzlich Wasserstoff sein können, mit der Bedingung, dass mindestens eins von $R_1$, $R_2$ und $R_3$ eine Gruppe der Formel III bedeutet, oder

A, wenn n = 2 ist, eine Gruppe der Formel VII ist, worin $R_{12}$ und $R_{13}$ eine Gruppe der Formel III bedeuten, mit Ausnahme der Verbindungen

6-[2,6-Di-isopropyl-4-(2'-methoxycarbonyl-ethyl)-phenoxy]-dibenz-[c,e] [1,2]-oxaphosphorin,

6-[2,6-Di-tert.-pentyl-4-(2'-ethoxycarbonyl-ethyl)-phenoxy]-dibenz-[c,e] [1,2]-oxaphosphorin und

6-[2-tert.-Butyl-4-methyl-6-(1',1'-dimethyl-4'-ethoxycarbonylbutyl)-phenoxy]-dibenz [c,e] [1,2]-oxaphosphorin,

sind neu und stellen einen weiteren Gegenstand dieser Erfindung dar.

Sie können in Analogie zu üblichen Methoden, beispielsweise durch Umsetzung eines phenols der Formel IX

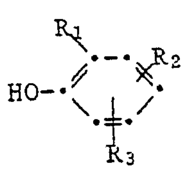

(IX)

oder eines Hydrochinons der Formel X

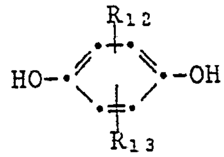 (X)

mit ca. einem bzw. zwei Mol 6-Chlorodibenz-[c,e] [1,2]-oxaphosphorin, wie z. B. in Beispiel 1 beschrieben, hergestellt werden.

Als nicht limitierende Beispiele von weiteren neuen Verbindungen der Formel I seien folgende Verbindungen genannt :

Verbindungen der Formel I, worin n = 1 ist

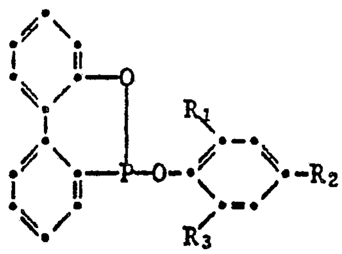

| $R_1$ | $R_2$ | $R_3$ |
|---|---|---|
| $-C(CH_3)_2-(CH_2)_3-COOCH_3$ | $-C(CH_3)_3-(CH_2)_3-COOCH_3$ | $-C(CH_3)_2-(CH_2)_3-COOCH_3$ |
| $-C(CH_3)_2-(CH_2)_3-COOCH_3$ | $-CH_3$ | $-C(CH_3)_2-(CH_2)_3-COOCH_3$ |
| $-C(CH_3)_3$ | $-C(CH_3)_2-(CH_2)_3-COOCH_3$ | $-CH_3$ |
| $-C(CH_3)_2-(CH_2)_3-COOCH_3$ | $-C(CH_3)_3$ | H |
| $-C(CH_3)_2-(CH_2)_3-COOCH_3$ | $-C(CH_3)_3$ | $-C(CH_3)_3$ |

Verbindungen der Formel I, worin n = 2 ist

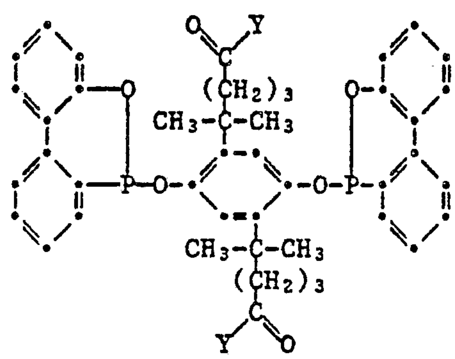

| Y |
|---|
| $-OC_{12}H_{25}$ |
| $-OCH_2-\underset{C_2H_5}{CH}-C_4H_9$ |
| $-O-(CH_2)_2-OC_4H_9$ |
| $-NH-C_4H_9$ |
| $-NH-(CH_2)_3-O-C_4H_9$ |

Die Verbindungen der Formel I wie auch Farbkuppler können in bekannter Weise in photographische Schichten eingearbeitet werden, z. B. in Silberhalogenidemulsionen, die Gelatine und/oder andere Bindemittel enthalten. Sie finden z. B. Anwendung in Silberbromid-, Silberchlorid- oder Silberjodidemulsionen oder in Emulsionen, die Gemische von Silberhalogeniden enthalten, wie Silberbromid/jodid- oder Silberchlorid/bromid-Emulsionen. Die Emulsionen können chemisch sensibilisiert werden und auch übliche organische Stabilisatoren, oder deren Gemische, wie gehinderte Amine, phenolische Komponenten wie gehinderte Phenole, Alkoxyphenole, Aryloxyphenole, Hydroxycoumarane, Hydroxychromane oder Dihydroxyspirochromane, Disulphonamidophenole oder substituierte Hydrochinone (wie z. B. in DE-OS 2 417 867 und EP Patentanmeldung 69 070 beschrieben), substituierte Hydrochinon-monoether (wie z. B. in EP Patentanmeldung 98 241 beschrieben) und substituierte Hydrochinon-diether (wie z. B. in DE-OS 2 839 434 beschrieben), wobei synergistische Effekte erzielt werden können, ferner UV-Absorber, optische Aufheller und photographisch wirksame Verbindungen, ferner Antischleiermittel, Verbindungen, welche photochemisch wirksame Produkte wie DIR-Verbindungen freisetzen können, sowie übliche Weichmacher, wie Glyzerin, enthalten. Die Farbkuppler und Dibenzoxaphosphorine sind normalerweise in hoch siedenden Lösungsmitteln gelöst. Diese Lösungsmittel haben einen Siedepunkt über 150 °C und weisen ein Molekulargewicht zwischen 100 und 1 000 auf. Beispielhaft seien erwähnt die organischen Amide, Carbonate, Ester, Ketone und Harnstoffderivate. Vorzugsweise verwendet man Di-n-butylphthalat, Di-octylphthalat, Tricresolphosphat, Trioctylphosphat, Di-i-octylazelainat, Di-n-butylsebacat, n-Nonylphenol oder deren Gemische. Die Emulsionen können auch mit für Gelatine üblichen Härtern gehärtet werden. Schliesslich können die Emulsionen auch übliche Beschichtungshilsmittel enthalten. Die Emulsionen können auf übliche Trägermaterialien für photographisches Bildmaterial appliziert werden. Gegebenenfalls kann ein Gemisch verschiedener Kolloide verwendet werden, um die Silberhalogenide zu dispergieren. Die Emulsionen können ausser dem Magentakuppler auch andere Kuppler enthalten, welche allein oder in Gemischen Farbstoffe während der Entwicklung erzeugen, z. B. Gelb-, Cyan- oder Schwarz-Farbstoffe.

Zum Entwickeln des Bildmaterials für Farbphotographie können übliche Entwicklungsbäder eingesetzt werden. Diese Bäder enthalten in der Regel eine Entwicklungssubstanz des p-Phenyldiamin Typs, einen Entwicklungsverzögerer, wie Kaliumbromid, ein Antioxidans, wie ein Salz der schwefligen Säure, z. B. Natriumsulfit und/oder Hydroxylamin und eine Base, z. B. ein Alkalimetallhydroxid oder Alkalimetallcarbonat. Die Entwicklungsbäder können auch übliche Antischleiermittel, Komplexiermittel, Benetzungsmittel, optische Aufheller und sonstiges enthalten.

Entsprechende Anwendungsgmöglichkeiten sind z. B. in den US-Patentschriften 2 304 939, 2 304 940, 2 322 027, 2 284 879, 2 801 170, 2 801 171, 2 749 360 und 2 825 382 beschrieben.

Das erfindungsgemäss zu stabilisierende photoraphische Material enthält die üblicherweise zum Einsatz kommenden Magentakuppler wie sie z. B. in The Theory of the Photographic Process, 4th Edition, (Macmillen), Seiten 356-358 sowie in der US-PS 3 676 137 beschrieben sind, wie z. B. die des Pyrazolon-Typs, insbesondere 1-(substituiertes Phenyl)-3-anilino-, -3-benzanilido- und -3-ureido-pyrazolin-5-on. Bei diesen Kupplern kann es sich um Zwei- oder Vieräquivalent-Kuppler handeln.

Bevorzugt verwendet man Magentakuppler der Formel

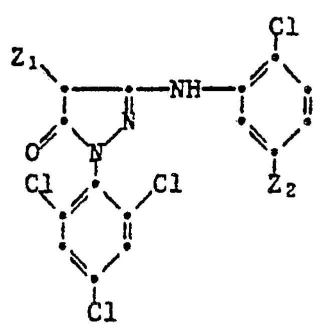

worin $Z_1$ Wasserstoff oder eine Gruppe bedeutet, welche während der Entwicklung frei bleibt, wie z. B.

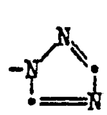

oder

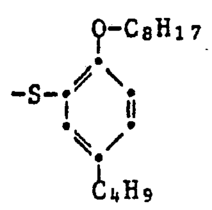

und $Z_2$ für eine Gruppe

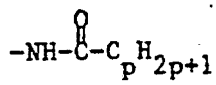, 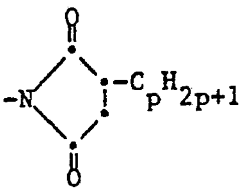 oder 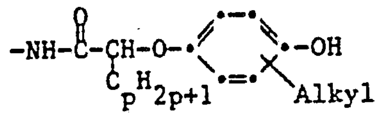

steht, wobei p eine Zahl von 1-18 ist.

Die nachfolgenden Beispiele erläutern die Erfindung.

Beispiel 1

5,0 g 2,5-Bis-(5-n-hexyloxycarbonyl-2-methylpent-2-yl)-hydrochinon werden in 150 ml Triäthylamin gelöst und 5,1 g 6-Chlorodibenz-[c,e] [1,2]-oxaphosphorin zugegeben. Das Reaktionsgemisch wird 4 Stunden bei 80 °C gerührt, auf Raumtemperatur gekühlt und filtriert. Das Triäthylamin wird unter erniedrigtem Druck abdestilliert und das zurückbleibende Oel in 60 ml Petroläther gelöst. Diese Lösung wird auf 0 °C gekühlt und filtriert. Das Nutschgut wird mit kaltem Petroläther gewaschen und getrocknet. So erhält man 3,5 g 1,4-Bis-(dibenz [c,e] [1,2]-oxaphosphorin-6-yloxy)-2,5-bis-(5'-n-hexyloxycarbonyl-2'-methylpent-2'-yl)-benzol mit Smp. 85-90 °C. (Stabilisator 6).

Beispiel 2

0,145 g des Magentakupplers der Formel

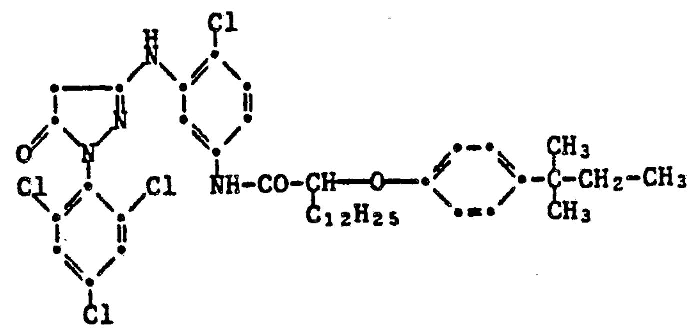

und 0,05 g eines der in der nachfolgenden Tabelle angegebenen erfindungsgemäss einzusetzenden Stabilisatoren werden in 5 ml eines Gemisches von Trikresylphosphat/Aethylacetat (1,5 g in 100 ml) gelöst. 1 ml dieser Lösung wird mit 9 ml einer 2,3 %igen Gelatinelösung die 0,04 Gew.% Netzmittel der Formel

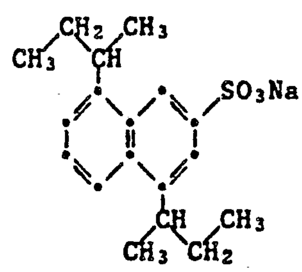

enthält 3 Minuten im Eiswasserbad mit Ultraschall bei einer Leistung von 75 Watt emulgiert. 5 ml dieser Emulsion werden mit 2 ml einer Silberbromidemulsion,welche 71 g Gelatine und 55 g Silber pro 1 kg Emulsion enthält, und 1 ml einer 0,7 %igen wässrigen Lösung des Härters der Formel

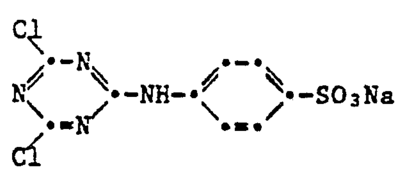

vermischt und bei einem pH 6,5 auf ein kunststoffbeschichtetes Papier vom Format 13 × 18 cm gegossen.

Nach dem Erstarren wird in einem Trockenschrank mit Umluft bei Raumtemperatur getrocknet. Nach 7 Tagen wird dieser Handguss hinter einem Stufenkeil mit 33 Lux-sec belichtet und anschliessend im Ektaprint 2®-Prozess der Firma Kodak verarbeitet.

Die so erhaltenen Magentakeile werden in einem Klima-Schrank bei 60 °C und 60 % relative Luftfeuchtigkeit 28 Tage gelagert. Durch Messungen am Anfang und am Ende der Behandlung bestimmt man die Klimavergilbung nach der Formel

$$\text{Klimavergilbung} = D_{min}(\text{Blau})_{28\ \text{Tage}} - D_{min}(\text{Blau})_{0\ \text{Tage}}$$

mit Hilfe eines Macbeth Densitometers TR 924® im Blau-Kanal.

Die Resultate sind in der nachstehenden Tabelle aufgeführt.

| Stabilisator | Klimavergilbung $D_{min}(\text{Blau})_{28} - D_{min}(\text{Blau})_{o}$ |
|---|---|
| Keiner | 0,15 |
| Stabilisator 2 | 0,07 |
| Stabilisator 3 | 0,06 |
| Stabilisator 4 | 0,06 |
| Stabilisator 5 | 0,05 |
| Stabilisator 6 | 0,06 |
| Stabilisator 7 | 0,11 |
| Stabilisator 8 | 0,06 |
| Stabilisator 9 | 0,06 |

Beispiel 3

0,145 g des Magentakupplers der Formel

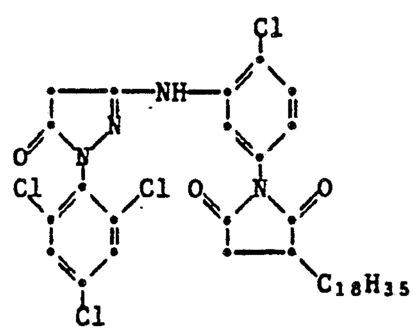

und 0,05 g des Stabilisators 6 werden wie in Beispiel 2 behandelt. Die Klimavergilbung ist in der nachstehenden Tabelle angegeben.

| Stabilisator | Klimavergilbung $D_{min}(\text{Blau})_{28} - D_{min}(\text{Blau})_{o}$ |
|---|---|
| Keiner | 0,20 |
| Stabilisator 6 | 0,10 |

Beispiel 4

0,145 g des Magentakupplers der Formel

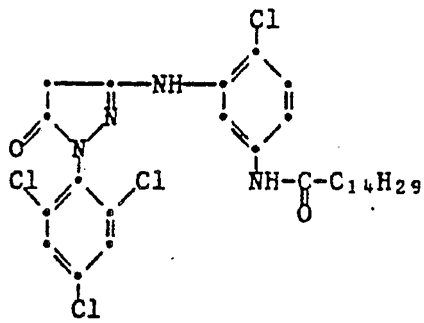

und 0,05 g des Stabilisators 6 werden wie in Beispiel 2 behandelt. Die Klimavergilbung ist in der folgenden Tabelle aufgeführt.

| Stabilisator | Klimavergilbung $D_{min}(Blau)_{28} - D_{min}(Blau)_{o}$ |
|---|---|
| Keiner | 0,21 |
| Stabilisator 6 | 0,15 |

In den nachfolgenden Beispielen wird neben Stabilisator 6 zusätzlich ein Magentakuppler-Lichtstabilisator eingesetzt :

Beispiel 5

0,145 g des Magentakupplers der Formel

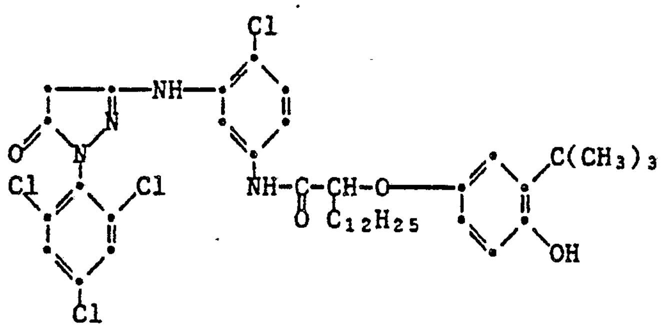

und 0,05 g des Stabilisators 6 oder eines Magentakuppler-Lichtstabilisators (im weiteren MFLS* genannt) der Formel

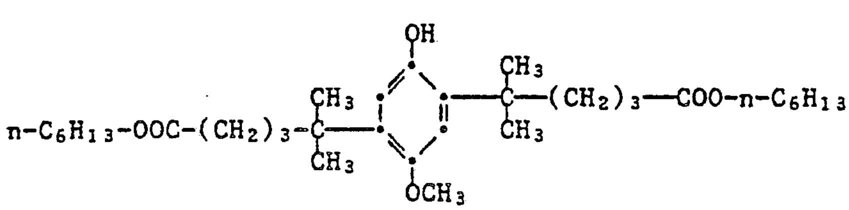

oder einer Mischung aus Stabilisator 6 und MFLS werden wie in Beispiel 2 behandelt.

Der eine Teil der so erhaltenen Magentakeile wird in einem Klimaschrank bei 70 °C und 60 % relativer Luftfeuchtigkeit während 28 Tagen gelagert und schliesslich die Klimavergilbung, wie in Beispiel 2 beschrieben, bestimmt.

* MFLS = Magentafarbstoff-Lichtstabilisator

Der andere Teil der Magentakeile wird in einem Atlasgerät, Atlas Weather Ometer, Typ Ci 35W, hinter einem UV-Filter, (2C-Filter der Fa. Kodak) mit 30 kJ/cm² bestrahlt. Durch Dichtemessungen am Anfang und am Ende der Behandlung wird die Atlasvergilbung (A.V.) nach der Formel

$$\text{Atlasvergilbung (A.V.)} = D_{min}(\text{Blau})_{30\ kJ/cm^2} - D_{min}(\text{Blau})_{0\ kJ/cm^2}$$

bestimmt.

Der Farbstoffverlust wird als Dichteverlust im Grünkanal in %, bezogen auf die vor der Behandlung gemessene Dichte D = 1,0, angegeben. Alle Dichtemessungen werden mit dem in Beispiel 2 angegebenen Gerät durchgeführt.

Die Resultate sind in der nachfolgenden Tabelle zusammengefasst :

| Stabilisator | K.V. | A.V. | Farbstoffverlust (%) |
|---|---|---|---|
| keiner | 0,23 | 0,20 | 26 |
| MFLS | 0,25 | 0,17 | 16 |
| Stabilisator 6 | 0,19 | 0,11 | 27 |
| MFLS + Stabilisator 6 (1:1) | 0,18 | 0,11 | 19 |
| MFLS + Stabilisator 6 (1:2) | 0,17 | 0,10 | 21 |

## Beispiel 6

0,077 g des Magentakupplers der Formel

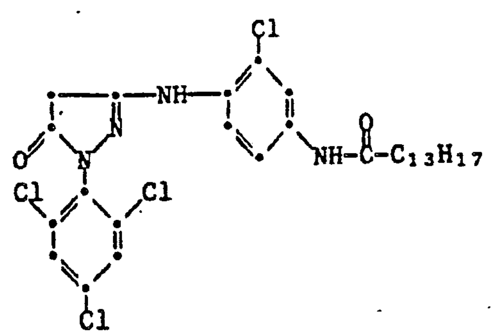

und 0,023 g des Stabilisators 6 bzw. des MFLS aus Beispiel 5, oder 0,046 g einer Mischung aus den beiden genannten Stabilisatoren werden wie in Beispiel 5 behandelt.

Die Ergebnisse sind in der nachfolgenden Tabelle aufgeführt :

| Stabilisator | K.V. | A.V. | Farbstoffverlust (%) |
|---|---|---|---|
| keiner | 0,13 | 0,15 | 75 |
| MFLS | 0,22 | 0,11 | 32 |
| Stabilisator 6 | 0,09 | 0,11 | 66 |
| MFLS + Stabilisator 6 (1:1) | 0,11 | 0,07 | 36 |

## Patentansprüche

1. Verfahren zum Stabilisieren von Magentakuppler enthaltendem photographischem Material, dadurch gekennzeichnet, dass in die den Magentakuppler enthaltende Emulsions- oder in eine an sie

angrenzende Kolloidschicht mindestens eine Verbindung der Formel I

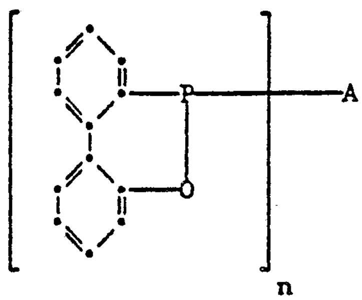

(I)

eingearbeitet wird,
worin
n die Zahl 1 oder 2 bedeutet und
A, wenn n = 1 ist, eine Gruppe der Formel II

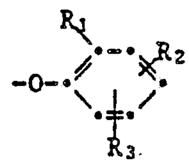

(II)

ist, worin $R_1$ $C_1$-$C_{18}$Alkyl, $C_5$-$C_6$Cycloalkyl, Cl, Br, CN, $C_7$-$C_{21}$-Aralkyl oder eine Gruppe der Formel III

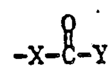

(III)

ist, worin X $C_2$-$C_8$Alkylen bedeutet und Y eine Gruppe —$OR_4$, —$N(R_5)(R_6)$, $C_1$-$C_4$Alkyl, der Rest

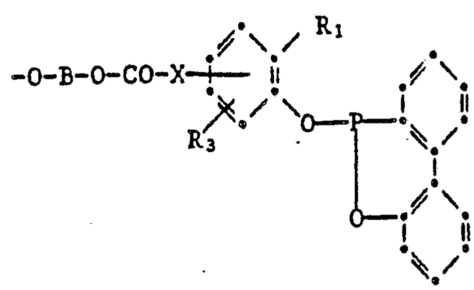

oder

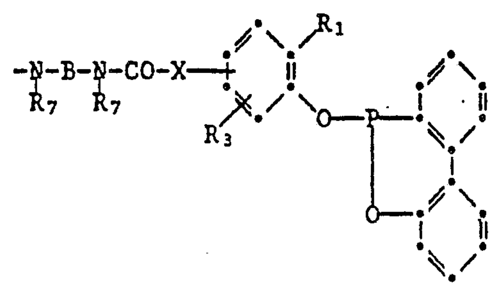

ist, wobei B ein ununterbrochenes oder ein- oder mehrmals durch —O— oder —S— unterbrochenes $C_1$-$C_{18}$Alkylen oder eine Gruppe der Formel

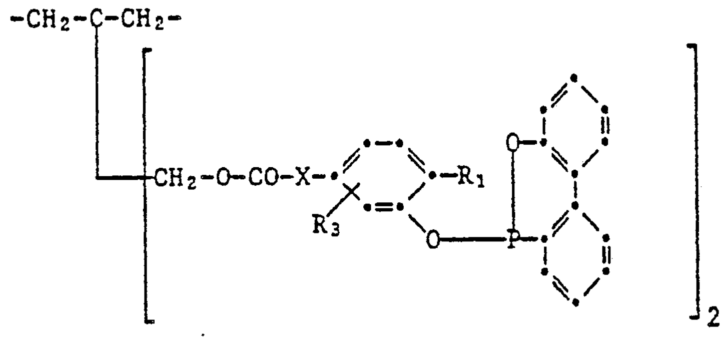

bedeutet,

$R_2$ für Wasserstoff, eine Gruppe $-OR_7$ oder für die gleiche Bedeutung wie $R_1$ steht, $R_3$ Wasserstoff ist oder die gleiche Bedeutung wie $R_1$ hat, $R_4$ ein ununterbrochenes oder ein- oder mehrmals durch —O— unterbrochenes $C_1$-$C_{18}$Alkyl, ein Polyäthylenglykolrest, Phenyl, substituiertes Phenyl oder Benzyl ist, $R_5$ und $R_6$ unabhängig voneinander Wasserstoff, $C_1$-$C_{18}$Alkyl, Phenyl, Benzyl oder eine Gruppe $-(CH_2)_m-O-R_8$ bedeuten, $R_7$ Wasserstoff oder $C_1$-$C_4$Alkyl ist, $R_8$ $C_1$-$C_{18}$Alkyl bedeutet und m eine Zahl zwischen 1 und 4 ist, oder $R_2$ und $R_3$ zusammen $C_3$-$C_8$Alkylen oder eine Gruppe

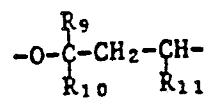

bilden, worin $R_9$, $R_{10}$ und $R_{11}$ unabhängig voneinander $C_1$-$C_4$Alkyl bedeuten, oder

A, wenn n = 2 ist, eine Gruppe der Formel IV

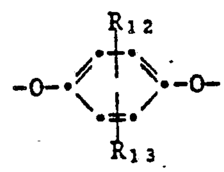

(IV)

bedeutet, worin $R_{12}$ und $R_{13}$ unabhängig voneinander $C_1$-$C_{18}$Alkyl oder eine Gruppe der Formel III sind oder A eine Gruppe der Formel V

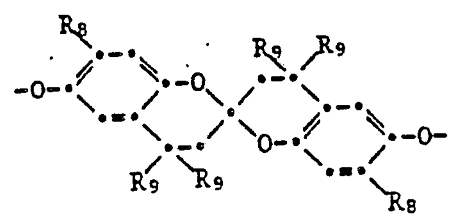

(V)

ist, worin $R_8$ und $R_9$ die oben angegebene Bedeutung haben.

2. Verfahren gemäss Anspruch 1, dadurch gekennzeichnet, dass eine Verbindung der Formel I eingesetzt wird, worin

A, wenn n = 1 ist, eine Gruppe der Formel II

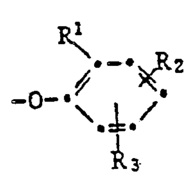

(II)

ist, worin $R_1$ $C_1$-$C_8$Alkyl, $C_5$-$C_6$Cycloalkyl, Cl, Br, CN, $C_7$-$C_{21}$-Aralkyl oder eine Gruppe der Formel III

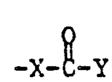

(III)

ist, worin X $C_2$-$C_8$Alkylen bedeutet und Y eine Gruppe $—OR_4$ oder $—N(R_5)(R_6)$, $R_2$ Wasserstoff, $R_1$ oder eine Gruppe $—OR_7$ ist, $R_3$ Wasserstoff oder $R_1$ bedeutet, $R_4$ ein ununterbrochenes oder ein- oder mehrmals durch —O— unterbrochenes $C_1$-$C_{18}$Alkyl, ein Polyäthylenglykolrest, Phenyl, oder Benzyl ist, $R_5$ und $R_6$ unabhängig voneinander Wasserstoff, $C_1$-$C_{18}$Alkyl, Phenyl, Benzyl oder eine Gruppe $—(CH_2)_m—O—R_8$ bedeuten, $R_7$ Wasserstoff oder $C_1$-$C_4$Alkyl ist, $R_8$ $C_1$-$C_{18}$Alkyl bedeutet und m eine Zahl zwischen 1 und 4 ist, oder $R_2$ und $R_3$ zusammen $C_3$-$C_8$Alkylen oder eine Gruppe

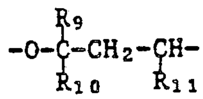

bilden, worin $R_9$, $R_{10}$ und $R_{11}$ unabhängig voneinander $C_1$-$C_4$Alkyl bedeuten, oder

A, wenn n = 2 ist, eine Gruppe der Formel IV

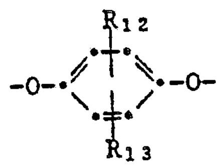

(IV)

bedeutet, worin $R_{12}$ und $R_{13}$ unabhängig voneinander $C_1$-$C_{18}$Alkyl oder eine Gruppe der Formel III sind oder A eine Gruppe der Formel V

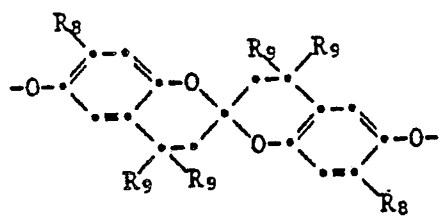

(V)

ist, worin $R_8$ und $R_9$ die oben angegebene Bedeutung haben.

3. Verfahren gemäss Anspruch 1, dadurch gekennzeichnet, dass eine Verbindung der Formel I eingesetzt wird, worin

A, wenn n = 1 ist, eine Gruppe der Formel II bedeutet, worin $R_1$ und $R_2$ unabhängig voneinander Wasserstoff, $C_1$-$C_{18}$Alkyl, $C_7$-$C_{21}$Aralkyl bedeuten und $R_3$ Wasserstoff ist oder $R_2$ und $R_3$ zusammen $C_2$-$C_8$Alkylen bilden, oder

A, wenn n = 2 ist, eine Gruppe der Formel IV ist, worin $R_{12}$ und $R_{13}$ $C_1$-$C_{18}$Alkyl oder eine Gruppe $—X—C(O)OR_4$ sind, worin X und $R_4$ die in Anspruch 1 angegebene Bedeutung haben.

4. Verfahren gemäss Anspruch 1, dadurch gekennzeichnet, dass eine Verbindung der Formel I eingesetzt wird, worin

A, wenn n = 1 ist, eine Gruppe der Formel VI

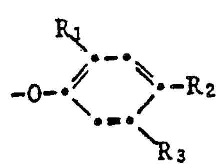

(VI)

bedeutet, worin $R_1$ und $R_2$ verzweigtes $C_4$-$C_8$Alkyl oder α,α-Dimethylbenzyl bedeuten und $R_3$ Wasserstoff ist oder $R_2$ und $R_3$ zusammen die Gruppe $—C(CH_3)_2—CH_2—C(CH_3)_2—$ bilden, oder

A, wenn n = 2 ist, eine Gruppe der Formel VII

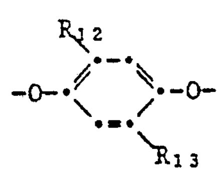

(VII)

bedeutet, worin $R_{12}$ und $R_{13}$ verzweigtes Alkyl oder eine Gruppe der Formel VIII

$$—C(CH_3)_2—(CH_2)_3—COOR_4 \qquad (VIII)$$

bedeuten, worin $R_4$ geradkettiges $C_1$-$C_{18}$Alkyl ist.

5. Verfahren gemäss Anspruch 1, dadurch gekennzeichnet, dass eine Verbindung der Formel I eingesetzt wird, worin

A, wenn n = 1 ist, eine Gruppe der Formel VI bedeutet, worin $R_1$ und $R_2$ tert.-Butyl, 1,1,3,3-Tetramethylbutyl oder α,α-Dimethylbenzyl bedeuten und $R_3$ Wasserstoff ist oder $R_2$ und $R_3$ zusammen eine Gruppe $—C(CH_3)_2—CH_2—C(CH_3)_2—$ bilden, oder

A, wenn n = 2 ist, eine Gruppe der Formel VIII bedeutet, worin $R_{12}$ und $R_{13}$ tert.-Butyl, 1,1,3,3-Tetramethylbutyl oder eine Gruppe der Formel VIII ist, worin $R_4$ $C_1$-$C_{10}$Alkyl bedeutet.

6. Verfahren gemäss Anspruch 1, dadurch gekennzeichnet, dass als Verbindung der Formel I

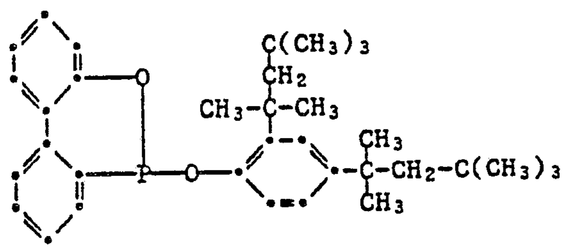

eingesetzt wird.

7. Verfahren gemäss Anspruch 1, dadurch gekennzeichnet, dass als Verbindung der Formel I

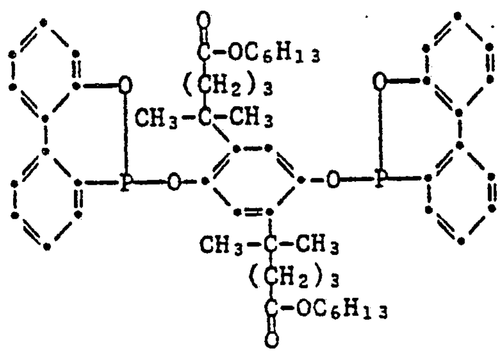

eingesetzt wird.

8. Verfahren gemäss Anspruch 1, dadurch gekennzeichnet, dass als Verbindung der Formel I

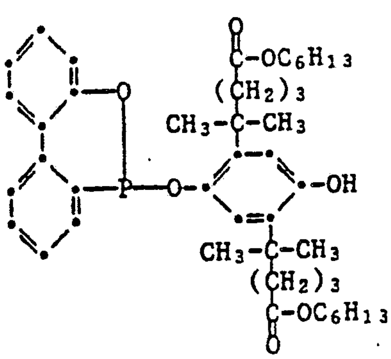

eingesetzt wird.

9. Verfahren gemäss Anspruch 1, dadurch gekennzeichnet, dass die Verbindung der Formel I in einer Menge von 1 bis 400 Mol%, bezogen auf den Magentakuppler, eingesetzt wird.

10. Verfharen gemäss Anspruch 1, dadurch gekennzeichnet, dass das photographische Material mindestens einen weiteren organischen Stabilisator, UV-Absorber, optischen Aufheller, Antischleiermittel und/oder Weichmacher enthält.

11. Verfahren gemäss Anspruch 1, dadurch gekennzeichnet, dass das photographische Material mindestens einen weiteren Farbkuppler enthält.

12. Verbindungen der Formel I

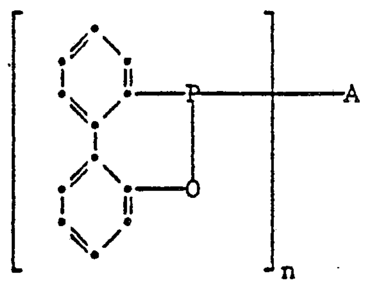

(I)

worin

n die Zahl 1 oder 2 bedeutet und

A, wenn n = 1 ist, eine Gruppe der Formel II

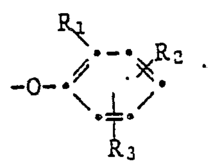

(II)

ist, worin $R_1$, $R_2$ und $R_3$ unabhängig voneinander $C_1$-$C_8$Alkyl, α,α-Dimethylbenzyl oder eine Gruppe der Formel III

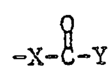

(III)

bedeuten, worin X $C_2$-$C_8$Alkylen ist und Y eine Gruppe $OR_4$ oder $—N(R_5)(R_6)$ bedeutet, $R_2$ zusätzlich Methoxy oder Aethoxy und $R_3$ zusätzlich Wasserstoff sein können, $R_4$ ununterbrochenes oder ein-oder mehrmals durch —O— unterbrochenes $C_1$-$C_{18}$Alkyl, Phenyl oder Benzyl ist, $R_5$ und $R_6$ unabhängig voneinander Wasserstoff, $C_1$-$C_{18}$Alkyl, Phenyl, Benzyl oder eine Gruppe $—(CH_2)_m—O—R_8$ bedeuten, $R_8$ $C_1$-$C_{18}$Alkyl ist und m eine Zahl zwischen 1 und 4 bedeutet, mit der Bedingung, dass mindestens eins von $R_1$, $R_2$ und $R_3$ eine Gruppe der Formel III bedeutet, oder

A, wenn n = 2 ist, eine Gruppe der Formel VII

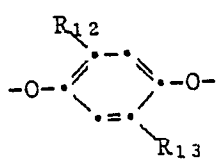

(VII)

ist, worin $R_{12}$ und $R_{13}$ eine Gruppe der Formel III mit der oben angegebenen Bedeutung sind, mit Ausnahme der Verbindungen

6-[2,6-Di-isopropyl-4-(2'-methoxycarbonyl-ethyl)-phenoxy]-dibenz-[c,e][1,2]-oxaphosphorin,

6-[2,6-Di-tert.-pentyl-4-(2'-ethoxycarbonyl-ethyl)-phenoxy]-dibenz-[c,e][1,2]-oxaphosphorin und

6-[2-tert.-Butyl-4-methyl-6-(1',1'-dimethyl-4'-ethoxycarbonyl-butyl)-phenoxy]-dibenz[c,e][1,2]-oxaphosphorin.

**Claims**

1. A process for stabilising photographic material containing a magenta coupler, which comprises incorporating into the emulsion layer containing the magenta coupler or into an adjoining colloid layer at least one compound of the formula I

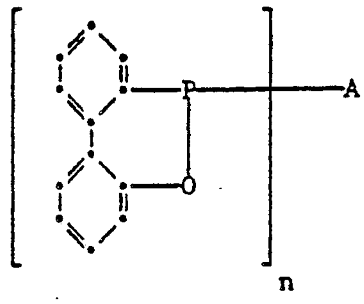

(I)

in which

n is the number 1 or 2 and

A, if n is 1, is a group of the formula II

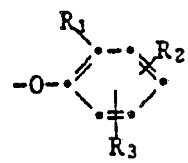

(II)

in which $R_1$ is $C_1$-$C_{18}$alkyl, $C_5$-$C_6$cycloalkyl, Cl, Br, CN, $C_7$-$C_{21}$aralkyl or a group of the formula III

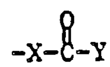

(III)

in which X is $C_2$-$C_8$alkylene and Y is a —$OR_4$, —$N(R_5)(R_6)$, $C_1$-$C_4$alkyl, the radical

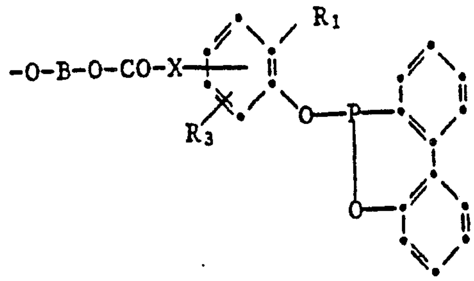

or

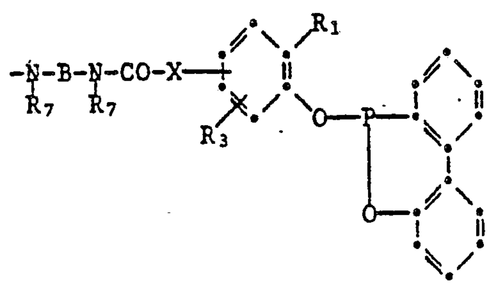

wherein B is $C_1$-$C_{18}$alkylene which is uninterrupted or interrupted one or more times by —O— or —S— or is a group of the formula

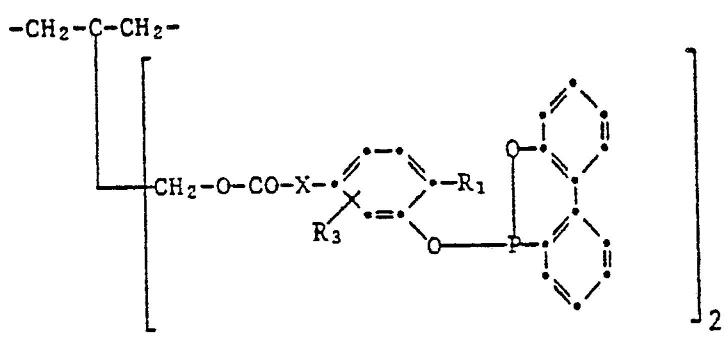

$R_2$ is hydrogen or a —$OR_7$ group, or has the same meaning as $R_1$, $R_3$ is hydrogen or has the same meaning as $R_1$, $R_4$ is $C_1$-$C_{18}$alkyl which is uninterrupted or interrupted one or more times by —O— or is a polyethylene glycol radical, phenyl, substituted phenyl or benzyl, $R_5$ and $R_6$, independently of each other, are hydrogen, $C_1$-$C_{18}$alkyl, phenyl, benzyl or a —$(CH_2)_l$—O—$R_8$ group, $R_7$ is hydrogen or $C_1$-$C_4$alkyl, $R_8$ is $C_1$-$C_{18}$alkyl and m is a number between 1 and 4, or $R_2$ and $R_3$ together are $C_3$-$C_8$alkylene or a group

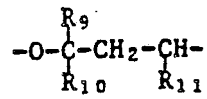

in which $R_9$, $R_{10}$ and $R_{11}$ independently of one another are each $C_1$-$C_4$alkyl, or

A, if n is 2, is a group of the formula IV

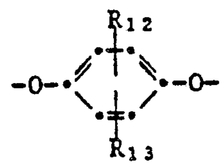

(IV)

in which $R_{12}$ and $R_{13}$, independently of each other, are each $C_1$-$C_{18}$alkyl or a group of the formula III or A is a group of the formula V

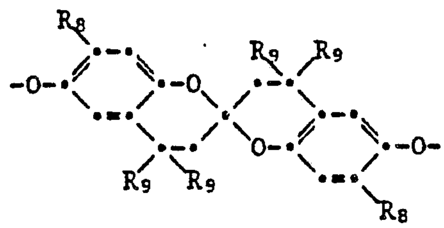

(V)

in which $R_8$ and $R_9$ are as defined above.

2. A process according to claim 1, wherein the compound used has the formula I in which

A, if n is 1, is a group of the formula II

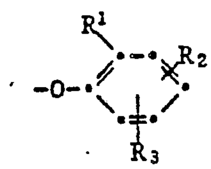

(II)

in which $R_1$ is $C_1$-$C_{18}$alkyl, $C_5$-$C_6$cycloalkyl, Cl, Br, CN, $C_7$-$C_{21}$aralkyl or a group of the formula III

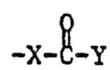

(III)

in which X is $C_2$-$C_8$alkylene and Y is a —$OR_4$ or —$N(R_5)(R_6)$ group, $R_2$ is hydrogen, $R_1$ or an —$OR_7$ group, $R_3$ is hydrogen or $R_1$, $R_4$ is $C_1$-$C_{18}$alkyl which is uninterrupted or interrupted one or more times by —O— or is a polyethylene glycol radical, phenyl or benzyl, $R_5$ and $R_6$, independently of each other, are hydrogen, $C_1$-$C_{18}$alkyl, phenyl, benzyl, or a —$(CH_2)_m$—O— $R_8$ is group, $R_7$ is hydrogen or $C_1$-$C_4$alkyl, $R_8$ is $C_1$-$C_{18}$alkyl and m is a number between 1 and 4, or $R_2$ and $R_3$ together are $C_3$-$C_8$alkylene or a group

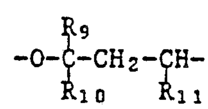

in which $R_9$, $R_{10}$ and $R_{11}$ independently of one another are each $C_1$-$C_4$alkyl, or

A, if n is 2, is a group of the formula IV

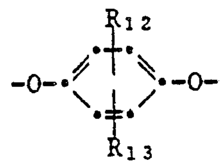
(IV)

in which $R_{12}$ and $R_{13}$, independently of one another, are each $C_1$-$C_{18}$alkyl or a group of the formula III or A is a group of the formula V

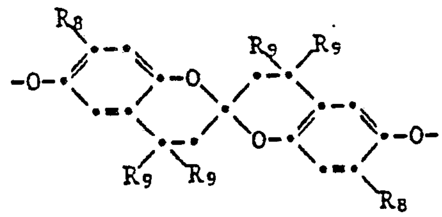
(V)

in which $R_8$ and $R_9$ are as defined above.

3. A process according to claim 1, wherein the compound used has the formula I in which

A, if n is 1, is a group of the formula II in which $R_1$ and $R_2$, independently of each other, are each hydrogen, $C_1$-$C_{18}$alkyl or $C_7$-$C_{21}$aralkyl, and $R_3$ is hydrogen, or $R_2$ and $R_3$ together are $C_2$-$C_8$alkylene, or

A, if n is 2, is a group of the formula IV in which $R_{12}$ and $R_{13}$ are each $C_1$-$C_{18}$alkyl or a —X—C(O)$OR_4$ group in which X and $R_4$ are as defined in claim 1.

4. A process according to claim 1, wherein the compound used has the formula I in which

A, if n is 1, is a group of the formula VI

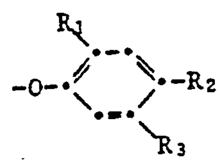
(VI)

in which $R_1$ and $R_2$ are branched $C_4$-$C_8$alkyl or α,α-dimethylbenzyl and $R_3$ is hydrogen, or $R_2$ and $R_3$ together are the $—C(CH_3)_2—CH_2—C(CH_3)_2$-group, or

A, if n is 2, is a group of the formula VII

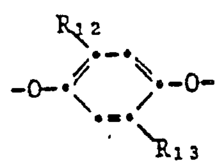
(VII)

in which $R_{12}$ and $R_{13}$ are each branched alkyl or a group of the formula VIII

$$—C(CH_3)_2—(CH_2)_3—COOR_4 \quad (VIII)$$

in which $R_4$ is straight-chain $C_1$-$C_{18}$alkyl.

5. A process according to claim 1, wherein the compound used has the formula I in which

A, if n is 1, is a group of the formula VI in which $R_1$ and $R_2$ are each tert-butyl, 1,1,3,3-tetramethylbutyl or α,α-dimethylbenzyl and $R_3$ is hydrogen or $R_2$ and $R_3$ together are a $—C(CH_3)_2—CH_2—C(CH_3)_2$-group, or

A, if n is 2, is a group of the formula VII in which $R_{12}$ and $R_{13}$ are each tert-butyl, 1,1,3,3-tetramethylbutyl or a group of the formula VIII in which $R_4$ is $C_1$-$C_{10}$alkyl.

6. A process according to claim 1, wherein the compound of the formula I used has the formula

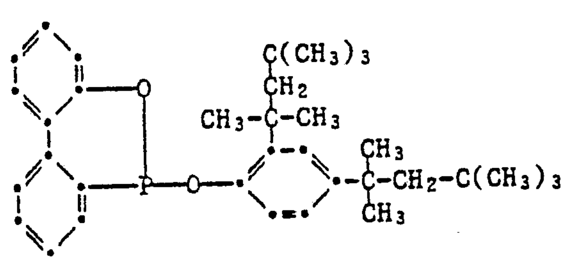

7. A process according to claim 1, wherein the compound of the formula I used has the formula

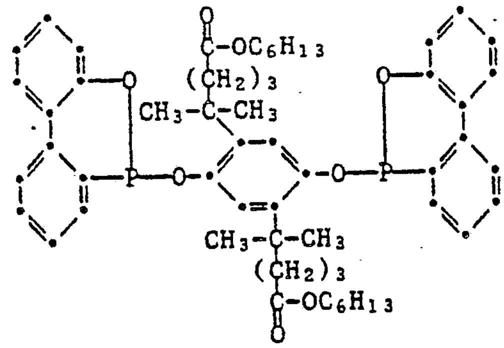

8. A process according to claim 1, wherein the compound of the formula I used has the formula

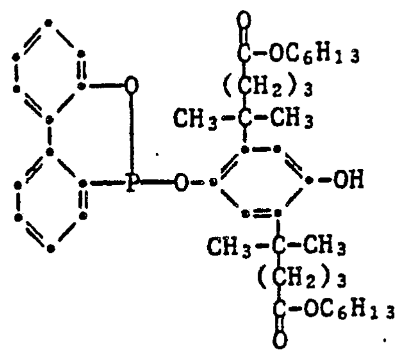

9. A process according to claim 1, wherein the compound of the formula I is used in an amount of 1 to 400 mol %, based on the magenta coupler.

10. A process according to claim 1, wherein the photographic material contains at least one further organic stabiliser, UV absorber, fluorescent brightening agent, anti-fogging agent and/or plasticiser.

11. A process according to claim 1, wherein the photographic material contains at least one further colour coupler.

12. A compound of the formula I

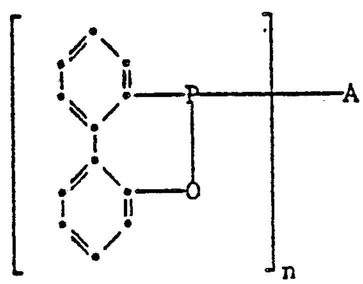

(I)

in which

n is the number 1 or 2 and

A, if n is 1, is a group of the formula II

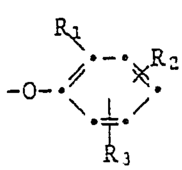

(II)

in which $R_1$, $R_2$ and $R_3$ independently of one another are each $C_1$-$C_8$alkyl, α,α-dimethylbenzyl or a group of the formula III

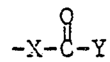

(III)

in which X is $C_2$-$C_8$alkylene and Y is an $OR_4$ or —$N(R_5)(R_6)$ group, $R_2$ can be in addition methoxy or ethoxy and $R_3$ can be in addition hydrogen, $R_4$ is $C_1$-$C_{18}$alkyl which is uninterrupted or interrupted one or more times by —O— or is phenyl or benzyl, $R_5$ and $R_6$, independently of each other, are each hydrogen, $C_1$-$C_{18}$alkyl, phenyl, benzyl or a —$(CH_2)_m$—O—$R_8$ group, $R_8$ is $C_1$-$C_{18}$alkyl and m is a number between 1 and 4, with the proviso that at least one of $R_1$, $R_2$ and $R_3$ is a group of the formula III or

A, if n is 2, is a group of the formula VII

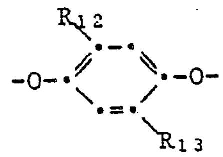

(VII)

in which $R_{12}$ and $R_{13}$ are each a group of the formula III having the abovementioned meaning, with the exception of the compounds

6-[2,6-di-isopropyl-4-(2'-methoxycarbonyl-ethyl)-phenoxy]-dibenz-[c,e][1,2]-oxaphosphorin,

6-[2,6-di-tert-pentyl-4-(2'-ethoxycarbonyl-ethyl)-phenoxy]-dibenz-[c,e][1,2]-oxaphosphorin and

6-[2-tert-butyl-4-methyl-6-(1'1'-dimethyl-4'-ethoxycarbonylbutyl)-phenoxy]-dibenz[c,e][1,2]-oxaphosphorin.

**Revendications**

1. Procédé pour stabiliser une matière photographique contenant un copulateur magenta, procédé caractérisé en ce qu'on incorpore, dans la couche d'émulsion contenant le copulateur magenta ou dans une couche colloïdale voisine, au moins un composé répondant à la formule I :

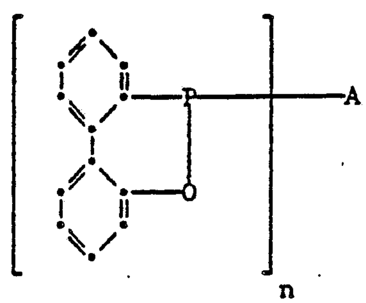

(I)

dans laquelle,

n désigne le nombre 1 ou le nombre 2, et

A représente, dans le cas où n est égal à 1, un radical répondant à la formule II :

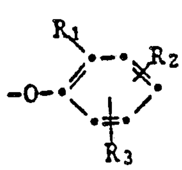

(II)

dans laquelle $R_1$ représente un alkyle en $C_1$-$C_{18}$, un cycloalkyle en $C_5$ ou $C_6$, Cl, Br, CN, un aralkyle en $C_7$-$C_{21}$ ou un radical de formule III :

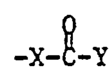

(III)

dans lequel X représente un alkylène en $C_2$-$C_8$ et Y un radical —$OR_4$, un radical —$N(R_5)(R_6)$, un radical alkyle en $C_1$-$C_4$ ou un radical :

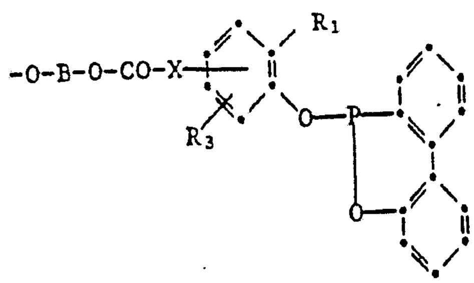

ou

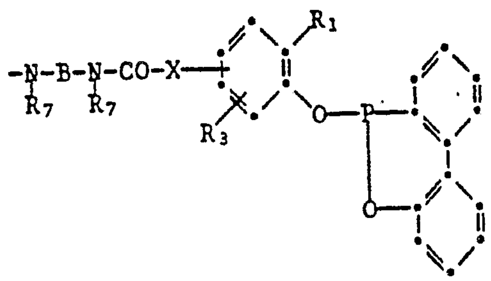

B désignant un alkylène en $C_1$-$C_{18}$ non interrompu ou interrompu une ou plusieurs fois par —O— ou —S—, ou un radical de formule :

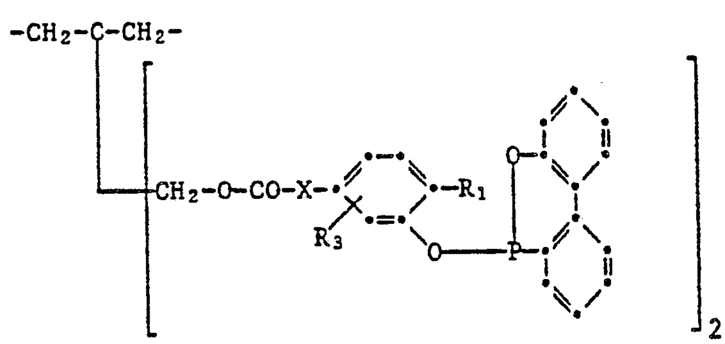

$R_2$ représente l'hydrogène ou un radical -$OR_7$ ou a la même signification que $R_1$, $R_3$ représente l'hydrogène ou a la même signification que $R_1$, $R_4$ représente un alkyle en $C_1$-$C_{18}$ non interrompu ou interrompu une ou plusieurs fois par -O-, un radical de polyéthylèneglycol, un phényle, un phényle substitué ou un benzyle, $R_5$ et $R_6$ représentent chacun, indépendamment l'un de l'autre, l'hydrogène, un alkyle en $C_1$-$C_{18}$, un phényle, un benzyle ou un radical $-(CH_2)_m-O-R_8$, $R_7$ représente l'hydrogène ou un alkyle en $C_1$-$C_4$, $R_8$ représente un alkyle en $C_1$-$C_{18}$ et m désigne un nombre de 1 à 4, ou $R_2$ et $R_3$ forment ensemble un alkylène en $C_3$-$C_8$ ou un radical :

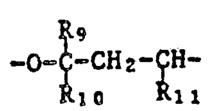

dans lequel $R_9$, $R_{10}$ et $R_{11}$ représentent chacun, indépendamment les uns des autres, un alkyle en $C_1$-$C_4$, ou

A représente, dans le cas où n est égal à 2, un radical de formule IV :

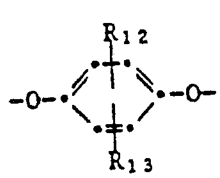

(IV)

dans lequel $R_{12}$ et $R_{13}$ représentent chacun, indépendamment l'un de l'autre, un alkyle en $C_1$-$C_{18}$ ou un radical de formule III, ou A représente un radical de formule V :

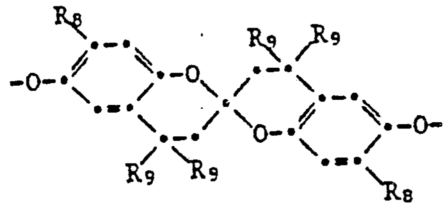

(V)

dans lequel $R_8$ et $R_9$ ont les significations qui leur ont été données ci-dessus.

2. Procédé selon la revendication 1 caractérisé en ce qu'on utilise un composé de formule I dans lequel

A représente, lorsque n est égal à 1, un radical répondant à la formule II :

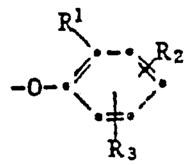

(II)

dans laquelle $R_1$ représente un alkyle en $C_1$-$C_{18}$; un cycloalkyle en $C_5$ ou $C_6$, Cl, Br, CN, un aralkyle en $C_7$-$C_{21}$ ou un radical de formule III :

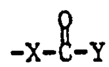

(III)

dans lequel X représente un alkylène en $C_2$-$C_8$ et Y un radical —$OR_4$ ou un radical —$N(R_5)(R_6)$, $R_2$ représente l'hydrogène ou un radical $OR_7$ ou a la signification de $R_1$, $R_3$ représente l'hydrogène ou a la signification de $R_1$, $R_4$ représente un alkyle en $C_1$-$C_{18}$ non interrompu ou interrompu une ou plusieurs fois par —O—, un radical de polyéthylène-glycol, un phényle, un phényle substitué ou un benzyle, $R_5$ et $R_6$ représentent chacun, indépendamment l'un de l'autre, l'hydrogène, un alkyle en $C_1$-$C_{18}$, un phényle, un benzyle ou un radical —$(CH_2)_m$—O—$R_8$, $R_7$ représente l'hydrogène ou un alkyle en $C_1$-$C_4$, $R_8$ représente un alkyle en $C_1$-$C_{18}$ et m désigne un nombre de 1 à 4, ou $R_2$ et $R_3$ forment ensemble un alkylène en $C_3$-$C_8$ ou un radical :

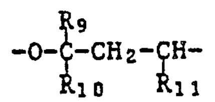

dans lequel $R_9$, $R_{10}$ et $R_{11}$ représentent chacun, indépendamment les uns des autres, un alkyle en $C_1$-$C_4$, ou

A représente, dans le cas où n est égal à 2, un radical de formule IV :

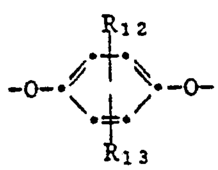

(IV)

dans lequel $R_{12}$ et $R_{13}$ représentent chacun, indépendamment l'un de l'autre, un alkyle en $C_1$-$C_{18}$ ou un radical de formule III, ou A représente un radical de formule V :

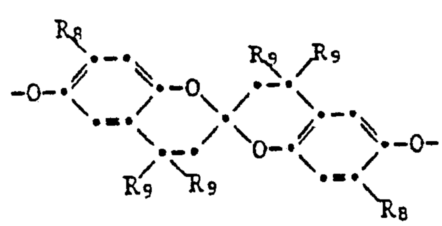

(V)

dans lequel $R_8$ et $R_9$ ont les significations indiquées ci-dessus.

3. Procédé selon la revendication 1 caractérisé en ce qu'on utilise un composé de formule I dans lequel

A représente dans le cas où n est égal à 1, un radical de formule II dans lequel $R_1$ et $R_2$ représentent chacun, indépendamment l'un de l'autre, l'hydrogène, un alkyle en $C_1$-$C_{18}$ ou un aralkyle en $C_7$-$C_{21}$ et $R_3$ représente l'hydrogène, ou $R_2$ et $R_3$ forment ensemble un alkylène en $C_2$-$C_8$, ou

dans le cas où n est égal à 2, un radical de formule IV dans lequel $R_{12}$ et $R_{13}$ représentent chacun un alkyle en $C_1$-$C_{18}$ ou un radical $—X—C(O)OR_4$ dans lequel X et $R_4$ ont les significations qui leur ont été données à la revendication 1.

4. Procédé selon la revendication 1 caractérisé en ce qu'on utilise un composé de formule I dans lequel A représente :

dans le cas où n est égal à 1, un radical de formule VI :

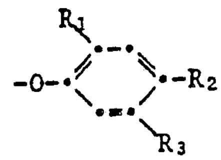

(VI)

dans lequel $R_1$ et $R_2$ représentent chacun un alkyle ramifié en $C_4$-$C_8$ ou un radical α,α-diméthylbenzyle, et $R_3$ représente l'hydrogène, ou $R_2$ et $R_3$ forment ensemble un radical $—C(CH_3)_2—CH_2—C(CH_3)_2—$, ou

dans le cas où n est égal à 2, un radical de formule VII :

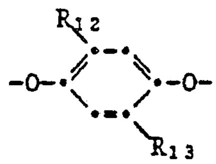

(VII)

dans lequel $R_{12}$ et $R_{13}$ représentent chacun un alkyle ramifié ou un radical de formule VIII :

$$—C(CH_3)_2—(CH_2)_3—COOR_4 \qquad (VIII)$$

dans lequel $R_4$ représente un alkyle linéaire en $C_1$-$C_{18}$.

5. Procédé selon la revendication 1 caractérisé en ce qu'on utilise un composé de formule I dans lequel A représente :

dans le cas où n est égal à 1, un radical de formule VI dans lequel $R_1$ et $R_2$ représentent chacun un radical tert-butyle, tétraméthyl-1,1,3,3 butyle ou α,α-diméthylbenzyle, et $R_3$ représente l'hydrogène, ou $R_2$ et $R_3$ forment ensemble un radical $—C(CH_3)_2—CH_2—C(CH_3)_2—$, ou

dans le cas où n est égal à 2, un radical de formule VII dans lequel $R_{12}$ et $R_{13}$ représentent chacun un radical tert-butyle, un radical tétraméthyl-1,1,3,3 butyle ou un radical de formule VIII dans lequel $R_4$ représente un alkyle en $C_1$-$C_{10}$.

6. Procédé selon la revendication 1 caractérisé en ce qu'on utilise, comme composé de formule I, celui qui répond à la formule suivante :

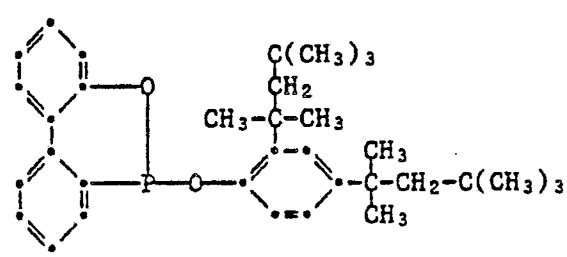

7. Procédé selon la revendication 1 caractérisé en ce qu'on utilise, comme composé de formule I, celui qui répond à la formule suivante :

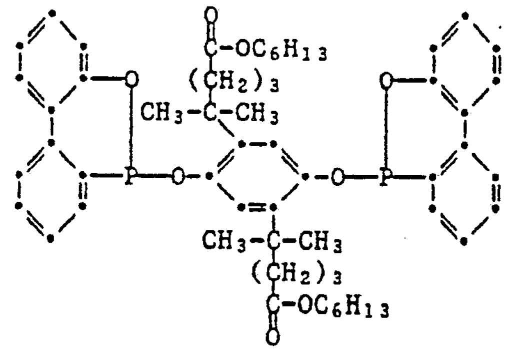

8. Procédé selon la revendication 1 caractérisé en ce qu'on utilise, comme composé de formule I, celui qui répond à la formule suivante :

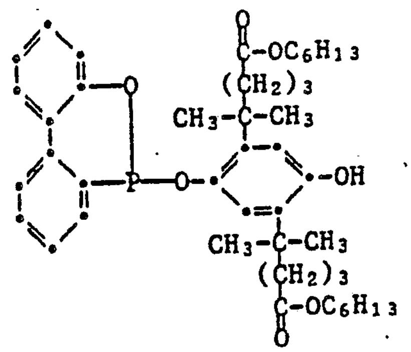

9. Procédé selon la revendication 1 caractérisé en ce que le composé de formule I est mis en jeu en une quantité de 1 à 400 % en moles par rapport au copulateur magenta.

10. Procédé selon la revendication 1 caractérisé en ce que la matière photographique contient au moins un autre additif pris parmi les autres stabilisants organiques, les absorbeurs de rayons ultra-violets, les azureurs optiques, les anti-voiles et les plastifiants.

11. Procédé selon la revendication 1 caractérisé en ce que la matière photographique contient au moins un autre copulateur chromogène.

12. Composés qui répondent à la formule I :

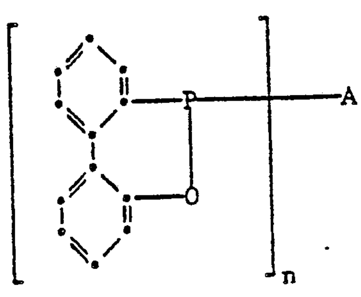

(I)

dans laquelle

n désigne le nombre 1 ou le nombre 2, et

A représente, dans le cas où n est égal à 1, un radical répondant à la formule II :

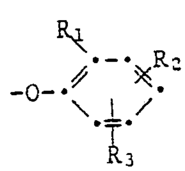

(II)

dans lequel $R_1$, $R_2$, $R_3$ représentent chacun, indépendamment les uns des autres, un alkyle en $C_1$-$C_8$, un α,α-diméthylbenzyle ou un radical de formule III :

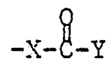

(III)

dont le symbole X représente un alkylène en $C_2$-$C_8$ et le symbole Y un radical $—OR_4$ ou $—N(R_5)(R_6)$, $R_2$ peut en outre représenter un méthoxy ou un éthoxy et $R_3$ peut en outre représenter l'hydrogène, $R_4$ représente un alkyle en $C_1$-$C_{18}$ non interrompu ou interrompu une ou plusieurs fois par —O—, ou représente un phényle ou un benzyle, $R_5$ et $R_6$ représentent chacun, indépendamment l'un de l'autre, l'hydrogène, un alkyle en $C_1$-$C_{18}$, un phényle, un benzyle ou un radical $—(CH_2)_m—O—R_8$, $R_8$ représente un alkyle en $C_1$-$C_{18}$ et l'indice m un nombre de 1 à 4, avec la condition qu'au moins l'un des symboles $R_1$, $R_2$ et $R_3$ représente un radical de formule III, ou

A représente, dans le cas où n est égal à 2, un radical de formule VII :

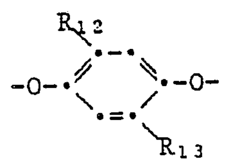

(VII)

dans lequel $R_{12}$ et $R_{13}$ représentent chacun un radical de formule III tel que défini ci-dessus, à l'exception des composés suivants :

le [di-isopropyl-2,6 (méthoxycarbonyl-2 éthyl)-4 phénoxy]-6 dibenzo [c,e] [1,2-oxaphosphanne],

le [di-tert-pentyl-2,6 (éthoxycarbonyl-2 éthyl)-4 phénoxy]-6 dibenzo [c,e] [1,2-oxaphosphanne] et

le [tert-butyl-2 méthyl-4 (diméthyl-1,1 éthoxycarbonyl-4 butyl)-6 phénoxy]-6 dibenzo [c,e] [1,2-oxaphosphanne].